# EUROPEAN PATENT APPLICATION

(11) **EP 3 660 678 A1**
(43) Date of publication of application: **03.06.2020**
(21) Application number: 18208879.9
(22) Date of filing: 28.11.2018
(51) Int. Cl.: G06F 11/07

(54) **CANARY RELEASE FOR STATIC CONTENT**

(71) Applicant: Siemens Aktiengesellschaft, 80333 München (DE)
(72) Inventor: Simakov, Dmitry, 76131 Karlsruhe (DE)

(57) **Abstract**

A client device comprising processor circuitry receives program code included in static website content from a backend structure, executes the program code in a web browser, monitors if at least one error occurs in executing the program code in the web browser, determines error data based on said monitoring, and transmits the error data to the backend structure. Based on the error data, measures are taken by the backend structure to release the program code.

## Description

### TECHNICAL FIELD

Various embodiments of the invention generally relate to releasing static content. Various examples of the invention specifically relate to methods for canary release of static content between a backend structure and a frontend device. Furthermore, a corresponding backend structure, a corresponding frontend device and corresponding computer program products are provided.

### BACKGROUND

Canary Release is a technique used to release a new version of software. The new version is first made available to a small group of end users before it is made available to everyone. This allows any errors to be detected and fixed at an early stage during the rollout of the new software version, or the rollout to be stopped without affecting most end users. Alternative conventional software testing techniques are internal betas, user testing, quality assurance or performance testing, wherein those methods are usually done in controlled test environments and can require extensive development of automated tools.

At release, or in other words rollout, of static content on a frontend device it is not possible to detect possible errors in program code related to an application included in the static content, because the application runs in a web browser of a client device of the end user, such that the developers have no possibility to monitor the application to be rolled out.

Therefore, a need exists for advanced techniques for static content release, which enable monitoring during the release of static content on client devices. Specifically, a need exists for canary release of static content including client-side program code that overcome or mitigate the above-identified restrictions and drawbacks.

### SUMMARY

This need is met by the features of the independent claims. The features of the dependent claims define further advantageous embodiments.

According to an example, a method for static content release by a backend structure is provided. Therein, program code is transmitted to a frontend device. In a further step, error data is received, wherein the error data is determined for at least one error occurring in executing the program code in a web browser by the frontend device. In another step, the error data is monitored in order to assess the program code.

A measure may be taken based on an analysis of the error data. As a general rule, the kind and type of measure is not particularly limited. Depending on the particular analysis, the type of the taken measure may vary. Likewise, the method for operating a backend structure may further comprise, based on analyzing the error data, at least one of the steps of maintaining the program code at the frontend device, modifying the program code at the backend structure, and returning to a state before the program code was transmitted to the frontend device.

According to a further example, an analysis of the error data or an analysis of the program code based on the error data may be performed by the developers of the backend system, and subsequently, based on such an analysis, the program code may be routed to further, or all, client devices.

According to another example, a method for operating a frontend device for static content release is provided.

Therein, program code is received from a backend structure. In another step the program code is executed in a web browser on the frontend device. In a further step, it is monitored, if at least one error occurs in executing the program code in the web browser. In a further step, error data is determined based on said monitoring. In a next step, the error data is transmitted to the backend structure.

The method for operating a frontend device may further comprise receiving further program code, which has been determined based on an analysis of the error data, wherein the analysis of the error data may be performed at the backend structure.

As will be appreciated, various techniques have been described which enable monitoring a release of static content at a client browser. In particular, the techniques provide detecting possible errors in executing program code, or an application, in a web browser at an end user, and thus enable monitoring an application in static content to be rolled out. Accordingly, the techniques advantageously provide methods for canary release of static content, in particular between a backend structure and a frontend device. A safer release of static content including client-side program code to be executed in a browser of the client may be provided, which enables detecting errors in the execution of the client-side code, which would remain undetected according to conventional release techniques.

The method of operating the backend structure can be interrelated with the method of operating the frontend device, according to further examples. Consequently, effects may be achieved by the method of operating a backend structure which add to the effects that may be achieved by the method of operating a frontend device.

The program code may be included in static content transmitted from the backend structure to the frontend device, in particular to a web browser on the frontend device. For example, static content may comprise HTML code, CSS code, and JavaScript program code. Thereby, the release of specifically static content within the meaning of a server-client-relationship, in particular static website content used in conventional websites, can be monitored.

The program code may be the frontend application part of an application, which includes a backend application part which is executed by the backend structure and the frontend application part which is executed by the frontend device. As known in the art, the frontend application and the backend application communicate with each other in execution. By monitoring execution of the client-side code of such an application on the client device, wherein the application is executed partly on the server-side and partly in a web browser on the client-side, the complete monitoring of the execution of such an application is provided.

As a general rule, determining error data for the at least one error may comprise calling a function, which is executed in the web browser, i.e. a function within the web browser, and which determines the error data in the web browser. The function for determining the error data may be an error handler in the web browser. The program code may be JavaScript program code. Thereby, the error data related to errors occurring in the web browser can be determined faster and directly within the web browser using script libraries and routines of the web browser.

In an example, the error data may be transmitted to the backend structure by the frontend device, more specifically by the web browser on the frontend device, and in a specific example by a function in the web browser. For example, function may be a function for determining the error data, an error handler function, or an independent transmitting function of the web browser. Thereby, the feedback of error data related to errors occurring in the web browser can be transmitted faster, i.e. directly, and more reliably directly from within the web browser using existing protocols and routines of a sever-client-model.

Likewise, the error data may comprise the error, the error type, and/or meta data related to the error, including data related or identifying the web browser, and application version of the application executed on the backend structure and frontend device, or more general to the computing environment, on which the web browser is being executed, e.g. the operating system of the client device. The additional data provides more efficient and precise error analysis, which is related to the specific environment, where the error occurs. Therefore, this information can advantageously be used to perform an improved software release, in particular canary release of static content.
In another example, a backend structure is provided, which comprises processor circuitry configured to perform the following steps. In a first step, program code is transmitted to a frontend device. In another step, error data is received from the frontend device, wherein the error data is determined for at least one error occurring in executing the program code in a web browser by the frontend device. In a further step, the error data is monitored in order to assess the program code.

The backend structure may be configured to perform further steps and may include further features as described in the above examples for methods for release of static content.

In a further example, a device is provided, which comprises processor circuitry configured to perform the following steps. The device may be configured as a front end device, or client device. In a first step program code is received from a backend structure. In another step, the program code is executed in a web browser on the device. In a further step, the device monitors if at least one error occurs in executing the program code in the web browser. In a further step, based on said monitoring, error data is determined by the device and the error data is transmitted to the backend structure.

The device may be configured to perform further steps and may include further features as described in the above examples for methods for a release of static content.

A computer program product or computer program includes program code that may be executed by at least one processor circuitry. Executing the program code causes the at least one processor circuitry to perform a method of operating a backend structure. The method includes: transmitting program code to a frontend device, receiving error data, which is determined for at least one error occurring in executing the program code in a web browser by the frontend device, and monitoring the error data in order to assess the program code.

A computer program product or computer program includes program code to be executed by at least one processor circuitry. Executing the program code by the at least one processor circuitry causes the at least one processor circuitry to perform a method of operating a client device, the method including: receiving program code from a backend structure, executing the program code in a web browser, monitoring if at least one error occurs in executing the program code in the web browser, determining error data based on said monitoring, and transmitting the error data to the backend structure.

The computer program products or computer programs may include program code, which causes a processor circuitry to perform further steps and implement further features as described in the above examples for methods for release of static content.

For such a backend structure, device and computer program products, technical effects can be achieved, which correspond to the technical effects described for the methods for static content release according to the invention, as described above.

Although specific features described in the above summary and the following detailed description are described in connection with specific embodiments and aspects of the present invention, it should be understood that the features of the exemplary embodiments and examples may be combined with each other, and correlate to each other, unless specifically noted otherwise.

Therefore, the above summary is merely intended to give a short overview over some features of some embodiments and implementations and is not to be construed as limiting. Other embodiments may comprise other features than the ones explained above.

### BRIEF DESCRIPTION OF THE FIGURES

The above and other elements, features, steps, and characteristics of the present disclosure will be more apparent from the following detailed description of embodiments with reference to the following figures:
- FIG. 1: schematically illustrates an architecture for canary release of static content including two backend structures, according to various examples;
- FIG. 2: schematically illustrates the architecture of FIG. 1 after validating the static content in a canary release technique, according to various examples;
- FIG. 3: illustrates a flowchart with steps for static content release by a backend structure, according to various examples;
- FIG. 4: illustrates a flowchart with steps for operating a frontend device for static content release, according to various examples;
- FIG. 5: schematically illustrates a backend structure comprising processor circuitry configured to perform a method for static content release, according to various examples; and
- FIG. 6: schematically illustrates a frontend device comprising processor circuitry configured to perform a method for static content release, according to various examples.

### DETAILED DESCRIPTION OF EMBODIMENTS

In the following, embodiments of the invention will be described in detail with reference to the accompanying figures. It is to be understood that the following description of embodiments is not to be taken in a limiting sense. The scope of the invention is not intended to be limited by the embodiments described hereinafter or by the figures, which are taken to be illustrative only.

The figures are to be regarded as being schematic representations and elements illustrated in the figures are not necessarily shown to scale. Rather, the various elements are represented such that their function and general purpose become apparent to a person skilled in the art. Any connection or coupling between functional blocks, devices, components, or other physical or functional units shown in the figures or described herein may also be implemented by an indirect connection or coupling. A coupling between components may also be established over a wireless connection. Functional blocks may be implemented in hardware, firmware, software, or a combination thereof.

Hereinafter, techniques for releasing static content are disclosed. Execution of program code 12 included in static content in a web browser 10 may be reliably monitored. Thereby, canary release of new static content including client-side program code to be executed in a web browser 10 of the client device 1 may be enabled.

Canary release, can also be referred to as a phased rollout or an incremental rollout. Canary release is a technique to reduce the risk of introducing a new software version in a live environment by slowly rolling out the change to a small subset of users before rolling it out to the entire infrastructure and making it available to all client devices.

A benefit of using canary releases is the ability to do testing of a new static content version in a live environment with a safe rollback strategy if errors are found. By slowly ramping up the load, error data can be determined and monitored in order to analyze how the new version impacts the live environment. This is an improved approach to creating an entirely separate testing environment, as a live environment sometimes can be more complex than a testing environment.

In software engineering, the frontend (or client) device 1 can be considered a device or service to a user, while the backend (or server-side) structure 4 is the infrastructure, which supports provision of service, often far removed physically from the client device 1. In particular, in the client-server model, the client is usually considered the frontend and the server is usually considered the backend. However, the backend may encompass multiple servers, clusters of web servers or database servers behind load balancers, or cloud computing structures or services. Therein, "backend" refers to the whole structure that the user does not directly interface with. Therefore, it is to be understood, that the expression backend structure may refer to a backend device, a backend computing device, physical server, virtual server, cloud computing service or any other backend infrastructure.

The embodiments of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a computer-program that is embodied in a non-transitory computer readable medium programmed to perform any number of the functions as disclosed.

Web browser 10 is used for retrieving and viewing electronic documents in HTML format. Web browser 10 communicates with one or more web servers 5 over one or more networks, such as the Internet, to retrieve content. A web browser 10 may be implemented on any frontend device 1 that can support browsing. Such a frontend device 1, in other words client device 1, can include, but is not limited to, a personal computer, mobile device such as a mobile phone, workstation, embedded system, game console, television, set-top box, or any other computing device 1 that can support browsing. Such a frontend device 1 may include, but is not limited to, a computing device 1 comprising processor circuitry 8 and computer readable memory 9 for executing and storing computer program code, and a web browser 10. Such a computing device may include software, firmware, and hardware.

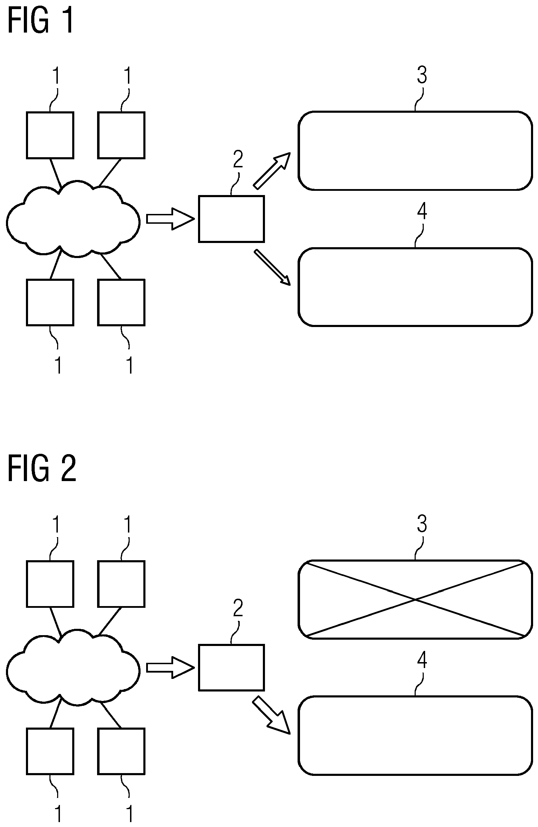

FIG. 1 schematically illustrates an architecture for canary release of static content including backend structures 3 and 4, according to various examples.

The architecture of FIG. 1 includes a router 2, which links or connects a plurality of frontend devices 1 to one of the backend structure 3 and 4. Specifically, the plurality of frontend devices 1, or in other words client devices 1, are routed to either backend structure 3 or backend structure 4, wherein, as indicated by the line thickness of the arrows in FIG. 1, a majority or most of the client devices 1 are routed to backend structure 3, which is a backend structure with an old version of software or program code to be transmitted to client devices 1, whereas only few frontend devices 1 are routed to backend structure 4, which is a backend structure according to the invention, as described in more detail below.

FIG. 2 schematically illustrates the architecture of FIG. 1 after validating the static content in a canary release technique, according to various examples.

As indicated by altered line thickness of the arrows in in FIG. 2 in comparison to FIG. 1, all client devices 1 in FIG. 2 are routed or linked to backend structure 4. Specifically, after performing a canary release of static content between client devices 1 and backend structure 4, wherein testing of a new software version has been done and the new software version has been assessed and/or successfully validated, only the new backend structure 4 is connected to client devices 1. Therein, backend structure 3 is no longer live or in operation for the users, as indicated by crossed out backend structure 3.

It will be appreciated by a person skilled in the art, that instead of routing to different backend structures 3 and 4, also one backend structure 4 can transmit old and new versions of static content, in this case, for example, when backend structure 4 is a cloud computing service, a router 2 is not used, but instead load balancing is provided within backend structure 4.

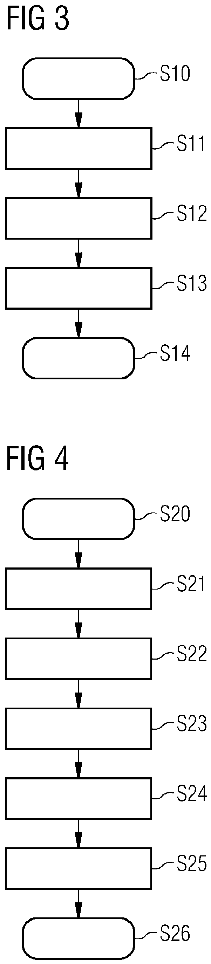

FIG. 3 illustrates a flowchart with steps of a method for static content release by a backend structure 4, according to various examples.

The method starts in step S10. In step S11, program code 12 is transmitted to a frontend device 1. The program code 12 may be part of static content transmitted from backend structure 4 to client device 1, in particular to web browser 10 executed on client device 1.

Therein, static content refers to static website content, which is only processed, i.e. executed, in web browser 10 in order to provide the content to a user viewing the web browser 10, and which is not executed not on the backend side. According to the example, the static content comprises HTML code, CSS code, and the program code 12, which is JavaScript program code.

In step S12, error data 13 is received, wherein the error data 13 is determined for at least one error occurring in executing the program code 12 in a web browser 10 by the frontend device 1. In some examples, the server logic of backend structure 4 receives error reports including the error data 13.

In step S13, the error data 13 is monitored, in order to assess program code 12. As will be appreciated by a person skilled in the art, the program code 12 can also analyzed based on the error data 13. In other examples, the error data 13 is analyzed in order to evaluate the program code 12.

Subsequently, based on analyzing the error data 13, the program code 12 can be maintained at the frontend device 1, for example, if no error occurred, or if no substantial error occurred in the program code 12. Accordingly, the error data 13 may also include that no or no substantial error occurred. Further, if an error occurred, the program code 12 can be corrected at the backend structure 4 by modifying the program code 12 to be transferred to and executed by frontend device 1, before rolling out the application to all front end devices 1 or, if correcting the program code 12 does not seem feasible, the release of the program code 12 can be stopped or undone, in particular by routing the frontend device 1 to an older static content version, or returning to transmitting older static content, such as the version before the program code 12 was transmitted to frontend device 1. In other words, the application can be monitored and exchanged.

According to other examples, an analysis of the error data 13 or an analysis of the program code 12 based on the error data 13 may not be performed by the backend structure 4, but by the developers of the backend structure 4, and subsequently, based on the analysis, the program code 12 is transmitted to further client devices 1 by the router 2, or one of the other above-described measures are taken.

The method ends in step S14.

FIG. 4 illustrates a flowchart with steps of a method for operating a frontend device 1 for static content release, according to various examples.

The method starts in step S20. In step S21, program code 12 is received from a backend structure 4. In step S22, the program code 12 is executed in a web browser 10 on the frontend device 1. In step S23, frontend device 1 monitors if at least one error occurs in executing the program code 12 in the web browser 10. In step S24, error data 13 is determined based on that monitoring.

The error data 13 is determined by the frontend device 1, wherein determining the error data 13 for the at least one error comprises calling a function within the web browser 10, which determines the error data 13 within the web browser 10, for example an error handler in the web browser 10.

In this example, during execution of the application in the web browser 10, an error handler is called for all errors occurring during execution of the program code 12 in the web browser 10. This can be done, in this example, with the *window.onerror* function, which is known to a person skilled in the art from the HTML Living Standard as of November 2, 2018.

In step S25, the error data 13 is transmitted to the backend structure 4. Therein, the error data 13 may comprise the error, the error type, and/or meta data related to the error, including data related or identifying the web browser 10, and application version of the application executed on the frontend device 1, or more general data characterizing the computing environment, on which the web browser is executed on the client device 1. In some examples, all errors including metadata (e.g. application version) are sent from the application to the backend (server).

In particular, the web browser 10 may execute requests, in order to send the errors that occurred in the web browser to the web server 5 at the backend structure 4. For example, the error data may be transmitted to the backend structure 4 by the frontend device 1, more specifically by the web browser 10 on the frontend device 1, and in a specific example by a function in the web browser 10. For example, the transmitting function may be a function for determining the error data 13, an error handler function, or an independent transmitting function of the web browser 10.

In some examples, further program code may be transmitted from the backend structure 4 to the client device 1, which has been determined based on an analysis of the error data 13 and/or an analysis of the program code 12 based on the error data 13. In particular, the analysis of the error data 13 and/or the program code may be performed at the backend structure 4. The method ends in step S26.

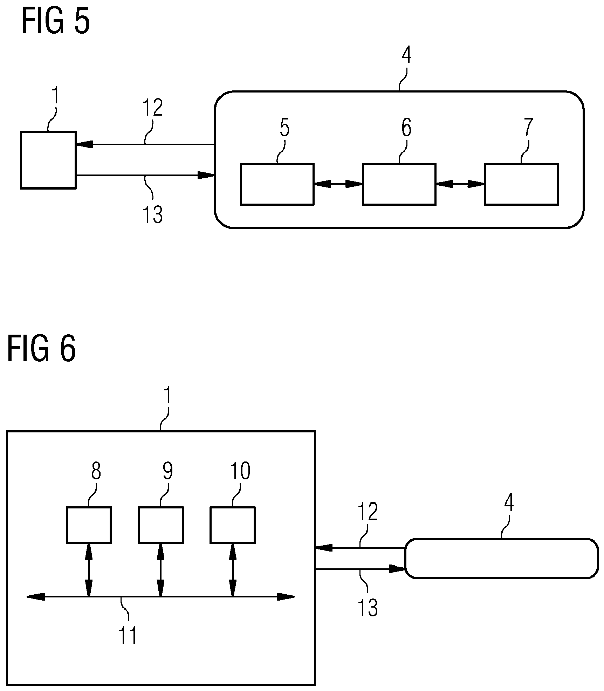

FIG. 5 schematically illustrates a backend structure 4 comprising processor circuitry configured to perform a method for static content release, according to various examples.

As depicted in FIG. 5, backend structure 4 comprises a web server 5, an application server 6, and database 7, which are connected with each other. Backend structure 4 is linked to a client device 1, wherein program code 12 is transmitted from the construction of 4 to client device 1, and error data 13 is transmitted from client device 1 backend structure 4.

Therein, application server 6 may provide an application to web server 5, which is partly executed on the client device 1, and partly executed on the web server 5 at the backend structure 4. Specifically program code 12 may be the frontend application part of the application, in an example program code 12 can be JavaScript program code. The program code 12 may be included in static content transmitted from the backend structure 4 to the web browser 10 on the frontend device 1. For example, the static content may comprise HTML code, CSS code, and JavaScript program code to be executed to display static content to a user in a web browser 10 on client device 1.

FIG. 6 schematically illustrates a frontend device 1 comprising processor circuitry configured to perform a method for static content release, according to various examples.

As depicted in FIG. 6, a client device 1 comprises processor circuitry 8, computer readable memory 9, and a web browser 10, which are interconnected with each other via bus 11. Computer readable memory 9 comprises program code, which, when executed in processor circuitry 8, causes the frontend device 1 to perform a method for static content release on client device 1. In a first step, program code 12 is received from a backend structure 4. In a further step the program code 12 is executed in web browser 10 at the frontend device 1. In another step, it is monitored, if at least one error occurs in executing the program code 12 in the web browser 10. In a further step, error data 13 is determined based on said monitoring and is transmitted to the backend structure 4.

Summarizing, methods, a backend structure and client device for static content release are provided, which enable monitoring the release, or in other words the rollout, of static content in a web browser of the client device. The techniques according to the invention allow to use all advantages of the Canary Release technique also for static website content. By reliable monitoring of static content release the Zero-Downtime goal in software development may be achieved.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A method for static content release by a backend structure (4), comprising:
- transmitting program code (12) to a frontend device (1);
- receiving error data (13), which is determined for at least one error occurring in executing the program code (12) in a web browser (10) by the frontend device (1); and
- monitoring the error data (13) in order to assess the program code (12).

2. The method for operating a backend structure (4) according to claim 1, further comprising, based on analyzing the error data (13):
- maintaining the program code (12) at the frontend device (1), or
- modifying the program code (12) at the backend structure (4), or
- returning to a state before the program code (12) was transmitted to the frontend device (1).

3. A method for operating a frontend device (1) for static content release, comprising:
- receiving program code (12) from a backend structure (4);
- executing the program code (12) in a web browser (10) on the frontend device (1);
- monitoring if at least one error occurs in executing the program code (12) in the web browser (10),
- determining error data (13) based on said monitoring; and
- transmitting the error data (13) to the backend structure (4) .

4. The method for operating a frontend device (1) according to claim 3, further comprising:
- receiving further program code (12), which has been determined based on an analysis of the error data (13) at the backend structure (4).

5. The method according to one of the preceding claims, wherein the program code (12) is included in static content transmitted from the backend structure (4) to the web browser (10) on the frontend device (1).

6. The method according to claim 5, wherein the static content comprises HTML code, CSS code and JavaScript program code.

7. The method according to one of the preceding claims, wherein the program code (12) is the frontend application part of an application including a backend application part, which is executed by the backend structure (4), and a frontend application part, which is executed by the frontend device (1).

8. The method according to one of the preceding claims, wherein the program code (12) is JavaScript program code (12) .

9. The method according to one of claims 3 to 8, wherein determining error data (13) for the at least one error comprises calling a function, which is executed in the web browser (10) and determines the error data (13) in the web browser (10).

10. The method according to one of the preceding claims, wherein the error data (13) is transmitted to the backend structure (4) by the frontend device (1), specifically by the web browser (10), more specifically by a function in the web browser (10).

11. The method according to claim 9 or 10, wherein the function is an error handler in the web browser (10).

12. The method according to one of the preceding claims, wherein the error data (13) comprises an error type and/or error meta data including data related to the web browser (10) and/or an application version.

13. A backend structure (4) comprising processor circuitry configured to perform:
- transmitting program code (12) to a frontend device (1);
- receiving error data (13) from the frontend device (1), wherein the error data (13) is determined for at least one error occurring in executing the program code (12) in a web browser (10) by the frontend device (1); and
- monitoring the error data (13) in order to assess the program code (12).

14. The backend structure (4) according to claim 13, further configured to perform the method according to one of claims 2 and 5 to 12.

15. A device comprising processor circuitry configured to perform:
- receiving program code (12) from a backend structure (4);
- executing the program code (12) in a web browser (10);
- monitoring if at least one error occurs in executing the program code (12) in the web browser (10),
- determining error data (13) based on said monitoring; and
- transmitting the error data (13) to the backend structure (4) .

16. The device according to claim 15, further configured to perform the method according to claims 4 to 12.

17. A computer program product including program code to be executed by at least one processor circuitry, wherein executing the program code causes the at least one processor circuitry to perform a method of operating a backend structure (4), comprising:
- transmitting program code (12) to a frontend device (1);
- receiving error data (13) from the frontend device (1), wherein the error data (13) is determined for at least one error occurring in executing the program code (12) in a web browser (10) by the frontend device (1); and
- monitoring the error data (13) in order to assess the program code (12).

18. A computer program product including program code to be executed by at least one processor circuitry, wherein executing the program code causes the at least one processor circuitry to perform a method of operating a client device (1), comprising:
- receiving program code (12) from a backend structure (4);
- executing the program code (12) in a web browser (10);
- monitoring if at least one error occurs in executing the program code (12) in the web browser (10),
- determining error data (13) based on said monitoring; and
- transmitting the error data (13) to the backend structure (4) .
